(19) Europäisches Patentamt
European Patent Office
Office européen des brevets

(11) **EP 2 287 806 B1**

(12) **EUROPEAN PATENT SPECIFICATION**

(45) Date of publication and mention
of the grant of the patent:
**29.08.2018 Bulletin 2018/35**

(51) Int Cl.:
**G06T 7/80** (2017.01)

(21) Application number: **09380137.1**

(22) Date of filing: **20.07.2009**

(54) **Calibration method for a TV and video camera**

Kalibrierungsverfahren für eine Fernseh- und Videokamera

Procédé d'étalonnage de caméra télévision et vidéo

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**23.02.2011 Bulletin 2011/08**

(73) Proprietor: **Mediaproducción, S.L.**
**08018 Barcelona (ES)**

(72) Inventors:
• **Alvarez Léon, Luis**
**08018 Barcelona (ES)**
• **Caselles Costa, Vicent**
**08018 Barcelona (ES)**

(74) Representative: **Urizar Anasagasti, Jesus Maria**
**IPAMARK, S.L.**
**Paseo de la Castellana 72 1°**
**28046 Madrid (ES)**

(56) References cited:
EP-A2- 2 034 440    GB-A- 2 452 546
US-A- 5 850 352     US-A1- 2001 031 067

• QIHE LI ET AL: "Automatic Camera Calibration for Images of Soccer Match" WORLD ACADEMY OF SCIENCE, ENGINEERING AND TECHNOLOGY,, vol. 1, 1 January 2005 (2005-01-01), pages 170-173, XP007910927
• FARIN D ET AL: "Robust camera calibration for sport videos using court models" PROCEEDINGS OF THE SPIE - THE INTERNATIONAL SOCIETY FOR OPTICAL ENGINEERING, SPIE, US, vol. 5307, 1 January 2004 (2004-01-01), pages 80-91, XP002364795 ISSN: 0277-786X
• SZENBERG F ET AL: "Automatic camera calibration for image sequences of a football match" ADVANCES IN PATTERN RECOGNITION - ICAPR 2001. SECOND INTERNATIONAL CONFERENCE. PROCEEDINGS (LECTURE NOTES IN COMPUTER SCIENCE VOL.2013) SPRINGER-VERLAG BERLIN, GERMANY, 2001, pages 301-310, XP007910926 ISBN: 3-540-41767-2
• SHIJIN LI ET AL: "Automatic Camera Calibration Technique and its Application in Virtual Advertisement Insertion System" INDUSTRIAL ELECTRONICS AND APPLICATIONS, 2007. ICIEA 2007. 2ND IEEE CO NFERENCE ON, IEEE, PI, 1 May 2007 (2007-05-01), pages 288-292, XP031137353 ISBN: 978-1-4244-0736-1

**Description**

Technical field of the invention

The present invention relates to a process for calibrating a video and TV camera, using a circle and complementary information. In particular, the present invention falls within the technical field of the audiovisual industry, more specifically camera calibration, i.e. estimation of all the parameters that allow the camera to be situated in the scene using images. The present invention is particularly applicable to the broadcasting of events, in particular sporting events.

Background of the invention

A large number of embodiments of camera and TV calibration processes and algorithms are known to exist in the current state-of-the-art, based on a straight line and a figure such a cone or square for calculating, in essence, the focal length of the camera lens and its position and orientation in space. Calibration involves the Euclidean parameterization of the zone of space of interest in order to allow, based on a theoretical point, the calculation of a conical perspective that responds to reality and the viewing of an event from a different point to that of the camera frame.

Full calibration of the camera entails the calculation of its intrinsic parameters, i.e. pixel size, projection centre, lens focal length and lens distortion model, and its extrinsic parameters, i.e. its position and rotation in space. Intrinsic parameters (except for focal length, which may vary in the case of zoom lenses) can be calculated in the laboratory using calibration patterns. The present invention falls within the scope of calibration of cameras wherein all the intrinsic parameters, except for focal length, are known, which is a customary situation in practice. Therefore, the parameters to be estimated are lens focal length and its position and orientation in space.

At present, current camera calibration methods require the localization of a minimum number of primitives in the scene. The usual case is to know the position in the field of at least four points or straight lines on a plane. When the number of localized primitives is insufficient, these techniques cannot be applied; such is the case on which the present invention focuses, wherein the main primitive used to calibrate the camera is a visible circle in the image. This situation frequently appears in cameras installed in sporting scenarios (for example, soccer fields or basketball courts) wherein the centre circle or free throw circle (basketball), etc are visible. Depending on the situation, complementary information is also usually visible, such as for example the midfield line, the central point, the baseline, etc.

Patent US5650352, by Saied Moezzi, Arun Katkere and Ramesh Jain discloses a *"telepresence"* method consisting of a representation of a real video scene, different to the instantaneous scene being viewed by a spectator, which comprises the generation of mosaics based on multiple video scenes of a three-dimensional scene, wherefrom other images and even interactive scenes or stereoscopic images are derived. The application of the method has the drawback of requiring multiple simultaneous images.

Patent Application US2001/0031067 A1, by Howard J. Kennedy Jr. and Yi Tan in 2001, *"2-D/3-D recognition and tracking algorithm for soccer application",* discloses a process for calibrating a camera based on an ellipse in the image which does not require multiple images. In accordance with the limitations established by the applicants themselves, the process can only be applied in very specific situations wherein the camera is oriented towards the centre of the field and aligned with the dividing central line in the case of stadiums or sports fields (i.e. wherein the ellipse is a regular ellipse) and the distance from the camera to the centre of the field is known. Additionally, the process is based on adjustment, whether manual or iterative, of the camera's orientation, with the potential convergence problems that are customary in iterative methods.

In the article by Qihe Li and Yupin Luo, "Automatic Camera Calibration for Images of Soccer Match," Proceedings of World Academy of Science, Engineering and Technology (Volume 1, January 2005, ISSN 1307-6884), the authors propose different methods for calculating the intrinsic and extrinsic parameters of a camera system based on a view of the centre circle, the midfield line and sidelines. To calculate the intrinsic parameters, the conic section on the plane at infinity and at least three views of the field are used. The circular points that provide the equations to calculate the intrinsic parameters can be calculated using the geometric information contained in the image of the centre circle and the lines mentioned in the preceding paragraph.

In this article, calculation of the extrinsic parameters of each camera is based on the calculation of the homography between the image field and reference field. In order to calculate the homography between the image field and reference field, the correspondence between at least four unaligned points is used for each camera. In order to obtain said unaligned points, points on the midfield line, centre line and points on an infinite plane are used.

The main limitations detected in this article are the following. Firstly, the article is mainly oriented towards the calculation of the intrinsic parameters which requires three views of the field, Secondly, the strategy for calculating the extrinsic parameters of each camera is based on calculating the homography between the image plane and reference field based on the extraction of corresponding points, giving rise to a process that is not very robust given the difficulty of accurately finding unaligned corresponding points on a central view of the field. Additionally, the method proposed in the article allows the detection of up to three points on the midfield line and a point on an infinite plane, which is not sufficient to calculate the homography (detecting a set of points on a straight line and a single point outside of the straight line is not sufficient to determine the homography). In fact, the article does not mention a single experiment to calculate extrinsic parameters.

The following articles:

Farin et al.: "Robust camera calibration for sport videos using court models" Proceedings of the SPIE - The International Society for Optical Engineering, SPIE, US, vol. 5307, January 2004, pages 80-91; and

Szenberg et al.: 2Automatic camera calibration for image sequencesof a football match" Advances in Pattern Recognition - ICAPR 2001. Second International Conference Proceedings (Lecture Notes in Computer Science Vol. 2013) Springer-Verlag Berlin, Germany 2001, pages 301-310,

describe the use of different line features and the intersection points of these lines for robust sport video camera calibration. By combining the teachings of any of these articles, the skilled person will arrive at the preamble of claim 1.

The present invention aims to offer a solution to these problems and limitations and provide a process that will allow cameras to be accurately calibrated in an automatic and direct manner (without iterative processes) in situations of high practical interest where the usual techniques cannot be used or because the number of primitives is insufficient for said methods. Or because the camera does not have a special configuration such as those established in the aforementioned patent.

Explanation of the invention

To this end, the object of the present invention is, in accordance with a first aspect, a new process for calibrating a camera using a view wherein a circle, the centre of the circle and a line that crosses the centre of the circle are visible, characterised in that it comprises the following stages:

a. Calculation of a homography that transforms the circle unit into the circle projected onto the image;
b. Full calculation of the homography that transforms the reference plane into the scene of the plane projected in the camera using two additional geometric elements; and
c. Calculation based on the homography of the focal length and the position and orientation of the camera in space.

In a first variant, said two additional geometric elements are the point at the centre of the circle and the line that crosses the centre of the circle.
In a second variant, said two additional geometric elements are two straight lines that are visible in the image.

Brief description of the drawings

A detailed description of preferred, although not exclusive, embodiments of the process that is the object of the invention is provided below, accompanied by drawings for the better understanding thereof, wherein forms of embodiment of the present invention are illustrated by way of non-limiting example. In said drawings:

Fig. 1     shows a schematic perspective view taken by a camera in a soccer field (shown to scale) where the centre circle, the point on the centre line and the midfield line are visible;
Fig. 2     shows a graphic illustrating the calibration of the camera of Fig. 1, wherein the position and orientation of the camera in space is shown;
Fig. 3     shows a schematic perspective view taken from a camera in a basketball court (shown to scale) wherein the centre circle, the midfield line and a baseline are visible; and
Fig. 4     shows a graphic illustrating the calibration of the camera of Fig. 3, wherein the position and orientation of the camera in space is shown.

Detailed description of the drawings

In said drawings we can observe the operation mode of the process of the present invention, for calibrating a camera 10 using a view wherein a circle 1 and complementary information are visible. Specifically, two scenarios are presented:

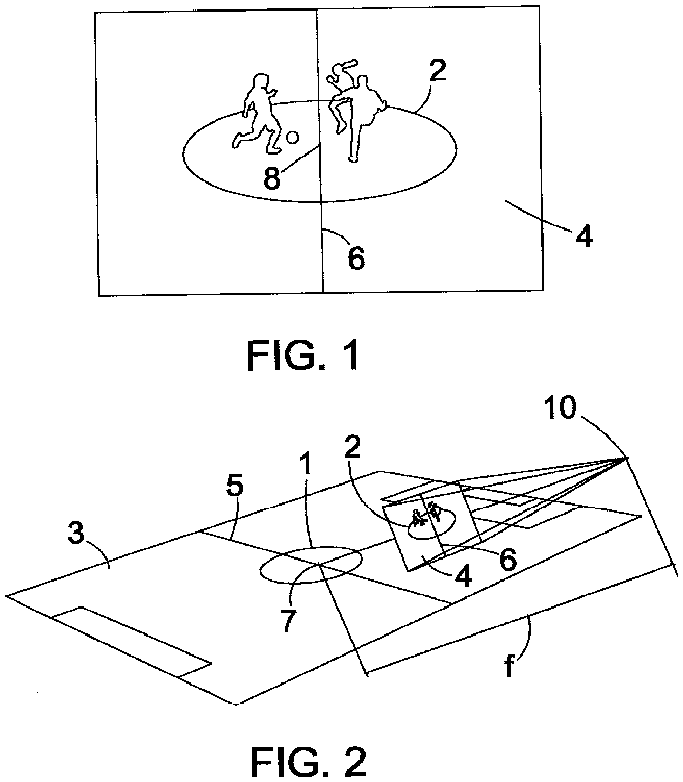

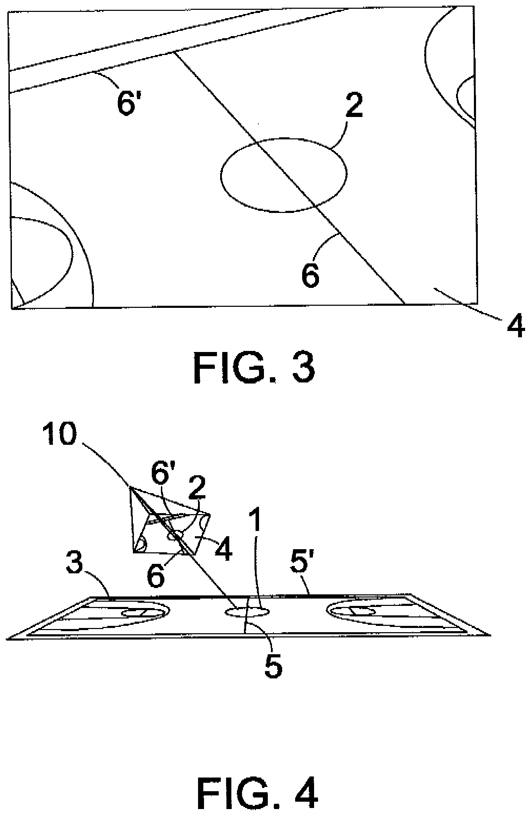

i) knowing the position of the centre circle 1, the centre 7 of the circle 1 and a line 5 that crosses the centre 7 of the circle 1 (as in the example shown in Figs. 1 and 1, relating to a soccer field), and

ii) knowing the position of a circle 1 and two straight tines 5 and 5' in the image (as in the example shown in Figs. 3 and 4, relating to a basketball court). The main stages of the proposed calibration process are the following:

(1) Calculation of a homography that transforms the circle unit into the circle projected, in the form of an ellipse 2, onto the image.

(2) Full determination of the homography that transforms the reference plane 3 in the scene into the plane projected 4 on the camera 10 using the complementary information obtained.

(3) Calculation based on the homography of the focal length *f* and the position and orientation of the camera 10 in space.

Each of these stages are explained in detail hereunder:

1) Calculation of a homography that transforms the circle unit into the circle projected, in the form of an ellipse 2, onto the image

We consider that the projection of the circle 1 onto the image is given by the ellipse 2 of the equation $\overline{x}^T A \overline{x} = 0$ where *A* is a 3x3 symmetric matrix. Likewise, *A* is a symmetric matrix that can be broken down (diagonalized) in the following manner:

$$A = O^T \begin{pmatrix} \lambda_1 & 0 & 0 \\ 0 & \lambda_2 & 0 \\ 0 & 0 & \lambda_3 \end{pmatrix} O \qquad (1)$$

Where O is an orthonormal matrix and $\lambda_1, \lambda_2, \lambda_3, > 0$ are the eigenvalues of *A*. It can be easily demonstrated that the transformation $\overline{x} = \tilde{H} y$ where

$$\tilde{H} = O^T \begin{pmatrix} 1/\sqrt{\lambda_1} & 0 & 0 \\ 0 & 1/\sqrt{\lambda_2} & 0 \\ 0 & 0 & 1/\sqrt{-\lambda_3} \end{pmatrix}, \qquad (2)$$

transforms the ellipse $\overline{x}^T A \overline{x} = 0$ into the circle unit.

(2) Full determination of the homography that transforms the reference plane 3 in the scene into the plane projected 4 on the camera 10, using the complementary information obtained

Upon determining a homography $\tilde{H}$ that transforms the projected circle or ellipse 2 in the image into the circle unit, any other transformation that preserves this property can be expressed as $H = \tilde{H} R_\alpha B_a R_\beta$, where

$$R_\alpha = \begin{pmatrix} \cos\alpha & \sin\alpha & 0 \\ -\sin\alpha & \cos\alpha & 0 \\ 0 & 0 & 1 \end{pmatrix} B_a = \begin{pmatrix} \sqrt{1+a^2} & 0 & a \\ 0 & 1 & 0 \\ a & 0 & \sqrt{1+a^2} \end{pmatrix} R_\beta = \begin{pmatrix} \cos\beta & \sin\beta & 0 \\ -\sin\beta & \cos\beta & 0 \\ 0 & 0 & 1 \end{pmatrix} (3)$$

and $\alpha$, $\beta$ and a are real parameters. Therefore, in order to fully determine the transformation of the field projected in the image in the real field, the parameters $\alpha$, a and $\beta$ must be established. To this end, the complementary information obtained in the scene will be used. Specifically with respect to this complementary information, we consider two possible scenarios:

*i) The centre 7 of the circle 1 and a straight line 5 that crosses the centre 7 of the circle 1 are known (Figs. 1 and 2)*
If (0,0) is the centre of the circle unit and $(x_0, y_0)$ is its projection 8 onto the image, we have:

$$\begin{pmatrix} a\cos\alpha \\ -a\sin\alpha \\ \sqrt{a^2+1} \end{pmatrix} = s\widetilde{H}^{-1}\begin{pmatrix} x_0 \\ y_0 \\ 1 \end{pmatrix} \qquad (4)$$

for a value of s and from this equation we can obtain a and $\alpha$ In order to obtain $\beta$, we use the information of the straight line 5 that crosses the centre 7 of the field 3. If we consider that the projection of the straight line $\overline{l}^\gamma \overline{x} = 0$, then we obtain the equation:

$$R_\beta^\gamma B_a^\gamma R_\alpha^\gamma \widetilde{H}^\gamma \overline{l} = s\begin{pmatrix} 1 \\ 0 \\ 0 \end{pmatrix} \qquad (5)$$

from which it is possible to obtain $\beta$.

*ii) in addition to a circle 1 there are two straight lines 5 and 5' visible in the image (Figs. 3 and 4)*

*iii)* We assume that two straight lines 6, 6' are known in the equation image $\overline{l_1^\gamma}\,\overline{x} = 0$ and $\overline{l_2^\gamma}\,\overline{x} = 0$ that correspond to the straight lines 5, 5' of the respective equations $\overline{v_1^\gamma}\,\overline{x'} = 0$ (straight line 6) and $\overline{v_2^\gamma}\,\overline{x'} = 0$ (straight line 6') on the reference plane. For each pair of corresponding straight lines the following must be true (for $i = 1.2$):

$$B_a R_\beta \overline{v_i} = s R_\alpha^\gamma \widetilde{H}^\gamma \overline{l_i} \qquad (6)$$

Given the shape of the matrices $R_\alpha, B_a, R_\beta$, taking the norm of the previous equivalence we arrive at a system of equations wherein the unknowns are a and $\beta$. Adding the information of the correspondences of the two pairs of straight lines (5, 6; 5', 6') we firstly obtain the values of a and $\beta$ and, subsequently, the value of $\alpha$.

(3) Calculation of the homography of the focal length *f* and the position and orientation of the camera 10 in space

The camera is represented by the reference point 10, which is representative 5 of the focus $\overline{c} = (c_x, c_y, c_z)$

$$H = \widetilde{H} R_a B_a R_\beta$$

Once we have fully determined the homography of the reference field 3 in the field projected 4 onto the image, we will estimate the focal length of the lens and the position of the camera in the scene. Firstly, we observe that the intrinsic parameters of the camera are given by:

$$I' = \begin{pmatrix} f & 0 & x_c \\ 0 & f \cdot r & y_c \\ 0 & 0 & 1 \end{pmatrix} \qquad (7)$$

where *f* represents the focal length (see Figs. 2 and 4), *r* is the reason for the aspect of the pixels and $(x_c, y_c)$ are the coordinates of the main point in pixels. All the elements are assumed known except for the focal length *f*. On the other hand, the relationship between the homography *H* and the camera parameters are given by:

$$H = sI'R\begin{pmatrix} 1 & 0 & -c_x \\ 0 & 1 & -c_y \\ 0 & 0 & -c_z \end{pmatrix} \qquad (8)$$

where $R$ is the rotation of the camera 10 in space and $\overline{c} = (c_x, c_y, c_z)$ is its focus. In order to calculate the focal length $f$ we will take the following equation into consideration:

$$H^\gamma \begin{pmatrix} 1 & 0 & -x_c \\ 0 & \frac{1}{r^2} & -\frac{1}{r^2}y_c \\ -x_c & -\frac{1}{r^2}y_c & \frac{1}{r^2}y_c^2 + x_c^2 + f^2 \end{pmatrix} H = f^2 s^2 \begin{pmatrix} 1 & 0 & -c_x \\ 0 & 1 & -c_y \\ -c_x & -c_y & (c_x)^2 + (c_y)^2 + (c_z)^2 \end{pmatrix} \quad (9)$$

and we will use the equivalence of the first 2x2 block of the previous relationship to determine the equations with which we can deduce the focal length $f$, the parameter $s$ and the vector $\overline{c} = (c_x, c_y, c_z)$. Together with $\overline{c}$, the position of the camera 10 in space is determined by the rotation $R$ that is calculated based on the relationship:

$$R = s^{-1} I^{-1} H \begin{pmatrix} 1 & 0 & -\dfrac{c_x}{c_z} \\ 0 & 1 & -\dfrac{c_y}{c_z} \\ 0 & 0 & -\dfrac{1}{c_z} \end{pmatrix} \quad (10)$$

As persons skilled in the art will understand, on one hand, the present method does not require the initial ellipse to be a regular ellipse, or know the distance from the camera to the centre line in advance.

In the same way, on the other hand, in accordance with the present invention, we use the information relative to a single image to calculate the homography: specifically, the equation of the ellipse resulting from projecting the midfield circle, midfield line and complementary information onto the image. Thus, in relation to the aforementioned article by Qihe Li and Yupin Luo ("Automatic Camera Calibration for Images of Soccer Match"), the method proposed in the present invention exploits the information obtained in the scene to a maximum and can correctly calculate the homography on which the calculation of the intrinsic parameters is based. Additionally, the method of the present invention is cheaper from the viewpoint of leveraging the information used.

Having sufficiently described the nature of the present invention, in addition to the manner of putting it into practice, we hereby state that anything which does not alter, change or modify its fundamental principle shall be subject to variations of detail.

## Claims

1. Process for calibrating a camera (10) based on an image wherein a circle (1) and at least one line are visible, comprising the stages of:

   a. Calculation of a homography ($\tilde{H}$) that transforms the circle unit into the circle (2) projected onto the image ;
   b. Full determination of the homography (H) that transforms the reference plane (3) in the scene into the plane projected (4) on the camera (10) based on two additional geometric elements; and
   c. Calculation based on the homography (H) of the focal length (f) and of the position and orientation of the camera (10) in space,

   **characterized in that** the said homography (H) that transforms the reference plane (3) in the scene into the plane projected (4) on the camera (10) is: a

$$H = \tilde{H} R_\alpha B_a R_\beta$$

where

$$R_\alpha = \begin{pmatrix} \cos\alpha & \sin\alpha & 0 \\ -\sin\alpha & \cos\alpha & 0 \\ 0 & 0 & 1 \end{pmatrix} \quad B_a = \begin{pmatrix} \sqrt{1+a^2} & 0 & a \\ 0 & 1 & 0 \\ a & 0 & \sqrt{1+a^2} \end{pmatrix} \quad R_\beta = \begin{pmatrix} \cos\beta & \sin\beta & 0 \\ -\sin\beta & \cos\beta & 0 \\ 0 & 0 & 1 \end{pmatrix}$$

and $\alpha$, $\beta$ and $a$ are parameters, calculated based on the information given by the cited two additional geometric elements mentioned that are the point of the center (7) of the circle (1) and a straight line (5) that crosses the center (7) of the circle (1);
the distance $a$ and the angle $\alpha$ being obtained from the following relation

$$\begin{pmatrix} a\cos\alpha \\ -a\sin\alpha \\ \sqrt{a^2+1} \end{pmatrix} = s\widetilde{H}^{-1} \begin{pmatrix} x_0 \\ y_0 \\ 1 \end{pmatrix}$$

where (0, 0) is the centre of the circle unit and $(x_0, y_0)$ is its projection (8) onto the image on the camera (10);
and the parameter $\beta$ being obtained from the relation

$$R_\beta^T B_a^T R_\alpha^T \widetilde{H}^T \bar{l} = s \begin{pmatrix} 1 \\ 0 \\ 0 \end{pmatrix}$$

where $\bar{l}$ is the said straight line (5) that satisfies the condition $\bar{l}^T x = 0$, and s is a parameter.

## Patentansprüche

1. Verfahren zum Kalibrieren einer Kamera (10) basierend auf einem Bild, wobei ein Kreis (1) und mindestens eine Linie sichtbar sind, umfassend die folgenden Schritte:

   a. Berechnung einer Homographie ($\tilde{H}$), die die Kreiseinheit in den Kreis (2) transformiert, der auf das Bild projiziert wird;
   b. Vollständige Bestimmung der Homographie (H), die die Referenzebene (3) in der Szene in die Ebene ransformiert, die basierend auf zwei zusätzlichen geometrischen Elementen auf die Kamera (10) projiziert (4) wird; und
   c. Berechnung basierend auf der Homographie (H) der Brennweite (f) und der Position und Orientierung der Kamera (10) im Raum,

   **dadurch gekennzeichnet, dass** die Homographie (H), die die Referenzebene (3) in der Szene in die Ebene transformiert, die auf die Kamera (10) projiziert (4) wird, wie folgt ist: a

$$H = \widetilde{H} R_\alpha B_a R_\beta$$

   wobei

$$R_\alpha = \begin{pmatrix} \cos\alpha & \sin\alpha & 0 \\ -\sin\alpha & \cos\alpha & 0 \\ 0 & 0 & 1 \end{pmatrix} \quad B_a = \begin{pmatrix} \sqrt{1+a^2} & 0 & a \\ 0 & 1 & 0 \\ a & 0 & \sqrt{1+a^2} \end{pmatrix} \quad R_\beta = \begin{pmatrix} \cos\beta & \sin\beta & 0 \\ -\sin\beta & \cos\beta & 0 \\ 0 & 0 & 1 \end{pmatrix}$$

und $\alpha$, $\beta$ und **a** Parameter sind, die basierend auf Informationen berechnet werden, die durch die zwei zusätzlichen geometrischen Elemente gegeben sind, die der Punkt des Zentrums (7) des Kreises (1) und eine gerade Linie (5) sind, die das Zentrum (7) des Kreises (1) durchquert;

der Abstand **a** und der Winkel $\alpha$ aus der folgenden Beziehung erhalten werden

$$\begin{pmatrix} a\cos\alpha \\ -a\sin\alpha \\ \sqrt{a^2+1} \end{pmatrix} = s\tilde{H}^{-1} \begin{pmatrix} x_0 \\ y_0 \\ 1 \end{pmatrix}$$

wobei (0, 0) das Zentrum der Kreiseinheit ist und $(x_0, y_0)$ ihre Projektion (8) auf das Bild auf der Kamera (10) ist; und der Parameter $\beta$ aus der folgenden Beziehung erhalten wird

$$R_\beta^T B_a^T R_\alpha^T \tilde{H}^T \bar{l} = s \begin{pmatrix} 1 \\ 0 \\ 0 \end{pmatrix}$$

wobei $\bar{l}$ die gerade Linie (5) ist, die die Bedingung $\bar{l}^T\bar{x} = 0$ erfüllt, und s ein Parameter ist.

**Revendications**

1. Procédé pour calibrer une caméra (10) basé sur une image dans laquelle un cercle (1) et au moins une ligne sont visibles, comprenant les étapes de :

a. Calcul d'une homographie ($\tilde{H}$) qui transforme l'unité de cercle en cercle (2) projeté sur l'image ;
b. Détermination totale de l'homographie (H) qui transforme le plan de référence (3) sur la scène en plan projeté (4) sur la caméra (10) basée sur deux éléments géométriques supplémentaires ; et
c. Calcul basé sur l'homographie (H) de la longueur focale (f) et de la position et orientation de la caméra (10) dans l'espace,

**caractérisé en ce que** ladite homographie (H) qui transforme le plan de référence (3) sur la scène en plan projeté 4 sur la caméra (10) est : a

$$H = \tilde{H}R_\alpha B_a R_\beta$$

où

$$R_\alpha = \begin{pmatrix} \cos\alpha & \sin\alpha & 0 \\ -\sin\alpha & \cos\alpha & 0 \\ 0 & 0 & 1 \end{pmatrix} \quad B_a = \begin{pmatrix} \sqrt{1+a^2} & 0 & a \\ 0 & 1 & 0 \\ a & 0 & \sqrt{1+a^2} \end{pmatrix} \quad R_\beta = \begin{pmatrix} \cos\beta & \sin\beta & 0 \\ -\sin\beta & \cos\beta & 0 \\ 0 & 0 & 1 \end{pmatrix}$$

et $\alpha$, $\beta$ et *a* sont des paramètres, calculés sur la base des informations données par les deux éléments géométriques supplémentaires mentionnés qui sont le point du centre (7) du cercle (1) et une ligne droite (5) qui traverse le centre (7) du cercle (1) ;

la distance *a* et l'angle $\alpha$ étant obtenus à partir du rapport suivant

$$\begin{pmatrix} a\cos\alpha \\ -a\sin\alpha \\ \sqrt{a^2+1} \end{pmatrix} = s\tilde{H}^{-1}\begin{pmatrix} x_0 \\ y_0 \\ 1 \end{pmatrix}$$

où (0, 0) est le centre de l'unité de cercle et $(x_0, y_0)$ est sa projection (8) sur l'image sur la caméra (10) ;

et le paramètre $\beta$ étant obtenu à partir du rapport

$$R_\beta^T B_0^T R_\alpha^T \tilde{H}^T \bar{l} = s\begin{pmatrix} 1 \\ 0 \\ 0 \end{pmatrix}$$

où $\bar{l}$ est ladite ligne droite (5) qui satisfait la condition $\bar{l}\bar{x} = 0$, et s est un paramètre.

# FIG. 1

# FIG. 2

**FIG. 3**

**FIG. 4**

## REFERENCES CITED IN THE DESCRIPTION

**Patent documents cited in the description**

- US 5650352 A, Saied Moezzi, Arun Katkere and Ramesh Jain

- US 20010031067 A1, Howard J. Kennedy Jr. and Yi Tan

**Non-patent literature cited in the description**

- **QIHE LI ; YUPIN LUO.** Automatic Camera Calibration for Images of Soccer Match. *Proceedings of World Academy of Science, Engineering and Technology,* 01 January 2005, ISSN 1307-6884
- Robust camera calibration for sport videos using court models. **FARIN et al.** Proceedings of the SPIE - The International Society for Optical Engineering. SPIE, January 2004, vol. 5307, 80-91

- 2Automatic camera calibration for image sequencesof a football match. **SZENBERG et al.** Advances in Pattern Recognition - ICAPR 2001. Second International Conference Proceedings (Lecture Notes in Computer Science Vol. 2013). Springer-Verlag, 2001, vol. 2013, 301-310
- **QIHE LI ; YUPIN LUO.** *Automatic Camera Calibration for Images of Soccer Match*